# EUROPÄISCHE PATENTSCHRIFT

(11) **EP 3 990 231 B1**
(45) Veröffentlichungstag und Bekanntmachung des Hinweises auf die Patenterteilung: **24.04.2024**
(21) Anmeldenummer: 20742654.5
(22) Anmeldetag: 26.06.2020
(51) Int. Cl.: B25J 9/16, G05B 19/423

(54) **SYSTEM ZUM VORNEHMEN EINER EINGABE AN EINEM ROBOTERMANIPULATOR**
SYSTEM FOR PERFORMING AN INPUT ON A ROBOTIC MANIPULATOR
SYSTÈME DE SAISIE SUR UN MANIPULATEUR ROBOTISÉ

(30) Priorität: 26.06.2019 DE 102019004478
(43) Veröffentlichungstag der Anmeldung: 04.05.2022
(73) Patentinhaber: Franka Emika GmbH, 80797 München (DE)
(72) Erfinder: SPENNINGER, Andreas, 85757 Karlsfeld (DE); GOLZ, Saskia, 80639 München (DE); PARUSEL, Sven, 80687 München (DE)
(74) Vertreter: Novagraaf Group
(86) Internationale Anmeldenummer: PCT/EP2020/067981
(87) Internationale Veröffentlichungsnummer: WO 2020/260555

(56) Entgegenhaltungen:
- WO-A1-2016/162066
- US-A- 5 652 603
- US-A- 5 880 956
- US-A1- 2013 345 870

## Beschreibung

Die Erfindung betrifft ein System zum Vornehmen einer Eingabe an einem Robotermanipulator sowie ein Verfahren zum Vornehmen einer Eingabe an einem Robotermanipulator.

Die WO 2016/162066 A1 aus dem Stand der Technik betrifft einen Industrieroboter mit einen um mehrere Achsen bewegbaren Manipulator und mit einer Robotersteuerung zum Steuern der Bewegungen des Manipulators, wobei die Robotersteuerung dazu eingerichtet ist, eine manuelle Programmierung des Industrieroboters mittels Durchführung des Manipulators unter Erhalt der Positionen des Manipulators zu unterstützen, und wobei die Robotersteuerung für jede erhaltene Position des Manipulators relativ zu mindestens einer der Achsen angeordnet ist. Es erfolgt ein Bestimmen, ob sich die erhaltene Position innerhalb mindestens einer vordefinierten haptischen Zone befindet, die der Achse zugeordnet ist, und ein Bereitstellen einer haptischen Rückkopplung, wenn bestimmt wird, dass sich die erhaltene Position innerhalb der haptischen Zone befindet.

Die US 5,880,956 A betrifft ferner ein System zur Programmierung einer Robotersimulation, um einen simulierten Endeffektor durch eine Reihe von gewünschten Pfadpunkten entlang eines gewünschten Bewegungspfads in Bezug auf eine Workstation zu fahren, umfassend unter anderem ein vom Menschen manipulierbares Endeffektormodell, das durch eine Reihe von Modellpfadpunkten entlang eines Modellbewegungspfads in Bezug auf die Arbeitsstation, die Modellpfadpunkte und den Modellbewegungspfad, der den gewünschten Pfadpunkten und dem gewünschten Bewegungspfad entspricht, bewegt werden kann; einen Encoder zur Bereitstellung von Modellpfadpunktdaten, die für die Position und Ausrichtung des Endeffektormodells in Bezug auf die Arbeitsstation an jedem der Modellpfadpunkte repräsentativ sind, wenn das Endeffektormodell durch den Modellpfad der Bewegung bewegt wird, wobei der Encoder eine Encoderkinematik definiert;

Aufgabe der Erfindung ist es, das Vornehmen einer Eingabe an einem Robotermanipulator durch einen Anwender zu verbessern.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft ein System zum Vornehmen einer Eingabe an einem Robotermanipulator, aufweisend:
- einen Robotermanipulator mit einer Vielzahl von durch Gelenke miteinander verbundenen Gliedern und mit Aktuatoren,
- eine mit dem Robotermanipulator verbundene Recheneinheit,
- eine mit der Recheneinheit verbundene Sensoreinheit,
wobei die Sensoreinheit zum Erfassen einer durch den Anwender durch manuelles Führen des Robotermanipulators aufgebrachten Eingabegröße am Robotermanipulator ausgeführt ist, wobei die Eingabegröße eine kinematische Größe oder eine Kraft und/oder ein Moment ist, und wobei die Sensoreinheit zum Übermitteln der Eingabegröße an die Recheneinheit ausgeführt ist, wobei die Recheneinheit zum Transformieren der Eingabegröße mittels einer vorgegeben Eingangsgrößenabbildung ausgeführt ist und die Eingangsgrößenabbildung eine mathematische Abbildung der Eingabegröße auf eine Koordinate einer graphischen Bedienoberfläche oder auf einen Einstellwert eines virtuellen Stellgliedes definiert.

Die Koordinate einer graphischen Bedienoberfläche entspricht insbesondere im Falle eines Bildschirms einer Koordinate auf dem Bildschirm, im Falle, dass die grafische Bedienoberfläche auf einer Brille für virtuelle Realität dargestellt wird, einer Koordinate auf der Brille für virtuelle Realität.

Als "Glied" des Robotermanipulators gemäß dem ersten Aspekt der Erfindung und auch im folgenden kann auch ein Endeffektor verstanden werden, wobei der Endeffektor am distalen Glied des Robotermanipulators typischerweise angeordnet ist.

Die Eingabegröße ist insoweit bevorzugt eine kinematische Größe, das heißt eine Position und/oder Orientierung zumindest eines Gliedes oder eines vordefinierten Punktes auf dem Robotermanipulator, oder eine zeitliche Ableitung davon, das heißt eine Geschwindigkeit oder eine Beschleunigung, oder alternativ bevorzugt dazu eine auf den Robotermanipulator ausgeübte Kraft durch den Anwender oder ein auf den Robotermanipulator ausgeübtes Moment durch den Anwender, wobei im letzteren Falle eines Moments oder einer Kraft bevorzugt die Recheneinheit dazu ausgeführt ist, die Aktuatoren des Robotermanipulators so anzusteuern, dass sich der Robotermanipulator als Starrkörper verhält, das heißt, so weit wie von den Aktuatoren möglich, diese ein Gegenmoment gegen eine versuchte Bewegung des Robotermanipulators durch den Anwender zu erzeugen. Dementsprechend umfasst die Sensoreinheit zumindest Sensoren, die sich zum Ermitteln einer Position und/oder Orientierung eines Gliedes oder eines Punktes auf dem Robotermanipulator oder mehrere Glieder eignen, und gegebenenfalls auch Kraftsensoren und/oder Momentensensoren.

Ist die grafische Bedienoberfläche auf einem Bildschirm daregstellt, so ist insbesondere die Eingangsgrößenabbildung eine Projektion der Eingabegröße auf die zweidimensionale Ebene des Bildschirms, insbesondere unter Berücksichtigung der geometrischen Grenzen des Bildschirms, wobei vorteilhaft der Robotermanipulator (und insbesondere seine Aktuatoren) bei einer solchen Eingabegröße, die mit dem Erreichen einer der Grenzen des Bildschirms korreliert, von der Recheneinheit so angesteuert wird, dass die Aktuatoren einen künstlichen Widerstand gegen eine weitere Bewegung des Robotermanipulators liefern.

Das virtuelle Stellglied ist bevorzugt einem realen physikalischen Stellglied nachgeahmt, beispielsweise einem Drehregler oder einem Schieberegler. Das virtuelle Stellglied hat insbesondere eine Untergrenze und eine Obergrenze und zwischen diesen beiden Grenzen ist ein Einstellwert definiert, der insbesondere als Parameter für den Robotermanipulator dienen kann.

Es ist eine vorteilhafte Wirkung der Erfindung, dass ein Anwender des Robotermanipulators intuitiv durch eine entsprechende Bewegung des Robotermanipulators durch ein entsprechendes Aufbringen einer Kraft oder eines Moments auf den Robotermanipulator eine Eingabe am Robotermanipulator vornehmen kann. Die Eingabe des Anwenders am Robotermanipulator kann insoweit einen numerischen Wert umfassen, oder auch ein Kommando am Robotermanipulator insbesondere bezüglich einer grafischen Bedienoberfläche, sodass die Eingabe des Anwenders vorteilhaft zur Menüsteuerung entweder per Mauszeiger (gesteuert durch die Eingabegröße) oder durch ledigliches Durchschalten von markierten Menüeinträgen oder Objekten auf der grafischen Bedienoberfläche dienen kann. Vorteilhaft kann der Anwender daher den Robotermanipulator universell als Eingabegerät verwenden, da durch die vorgegebene Eingangsgrößenabbildung ein entsprechender Bezug zur grafischen Bedienoberfläche bzw. zum virtuellen Stellglied hergestellt wird. Insbesondere kann vorteilhaft die Erfassung einer Kraft oder eines Moments oder auch einer Positionsänderung, jeweils bedingt durch das manuelle Führen des Anwenders am Robotermanipulator, als haptische Geste definiert werden, mit der insbesondere Menüs und Funktionsbereiche der grafischen Bedienoberfläche gesteuert werden können.

Weiterhin vorteilhaft kann das System gemäß dem ersten Aspekt der Erfindung auch für ein System mit einem ersten Robotermanipulator und einem zweiten Robotermanipulator verwendet werden, wobei insbesondere der erste Robotermanipulator zum Vornehmen der Eingabe gemäß dem ersten Aspekt der Erfindung verwendet wird und insbesondere der zweite Robotermanipulator zum Ausführen des ersten Aspekts der Erfindung in einer Alternative ausgeführt ist.

Gemäß einer vorteilhaften Ausführungsform ist die Recheneinheit zum Ausführen einer vorgegeben Operation des Robotermanipulators abhängig von der transformierten Eingabegröße bzw. der Koordinate bzw. des Einstellwerts ausgeführt.

Die vorgegebene Operation des Robotermanipulators ist dabei insbesondere die Aktivierung eines Objekts auf einer grafischen Oberfläche, bevorzugt verbunden mit der darauffolgenden Aktion des Robotermanipulators, beispielsweise die Parametrisierung einer Funktion oder eines Roboterprogramms, sowie ferner möglicherweise den Start der Ausführung eines solchen Programms oder einer solchen Funktion, weiterhin möglich die Abschaltung des Robotermanipulators, die Speicherung eines aktuellen Positionswertes oder eines Wertes der aktuellen Orientierung des Robotermanipulators.

Gemäß einer weiteren vorteilhaften Ausführungsform weist das System eine Anzeigeeinheit auf, wobei die Anzeigeeinheit zum Anzeigen zumindest eines der folgenden ausgeführt ist:
- Eingabegröße,
- Maß für die Eingabegröße,
- transformierte Eingabegröße,
- Maß für die transformierte Eingabegröße.

Die Anzeigeeinheit ist bevorzugt eines aus: Bildschirm, Projektor, Brille zum Anzeigen einer virtuellen Realität, LED-Einheit. Vorteilhaft wird hierdurch dem Anwender instantan eine Rückmeldung gegeben, welche Art von Eingabe und/oder in welcher Höhe er die Eingabe momentan tätigt. Insbesondere ist die Anzeigeeinheit zum Anzeigen eines Mauszeigers mit der aktuellen Koordinate als Mauszeigerkoordinate und/oder zum Anzeigen des aktuellen Einstellwertes des virtuellen Stellgliedes ausgeführt.

Gemäß einer weiteren vorteilhaften Ausführungsform ist die Sensoreinheit zum Erfassen einer aktuellen Position und/oder Orientierung des Robotermanipulators und zum Übermitteln der aktuellen Position und/oder Orientierung an die Recheneinheit ausgeführt, wobei die Recheneinheit zum derartigen Ansteuern der Aktuatoren ausgeführt ist, dass der Robotermanipulator beim manuellen Führen auf eine vorgegebene geometrische Struktur zu gegen die durch manuelles Führen verursachte Bewegung des Robotermanipulators einen Widerstand erzeugt, und wobei die Rechenheit zum Aktivieren einer vorgegebenen Funktion ausgeführt ist, wenn ein vorgegebener Grenzwert im Widerstand überschritten wird oder ein vorgegebener Grenzwert im Abstand eines vordefinierten Punktes des Robotermanipulators zur geometrischen Struktur unterschritten wird. Vorteilhaft wird durch diese Ausführungsform ein Eingabeelement am Robotermanipulator eingespart, sodass durch die reine Gestensteuerung des Anwenders beispielsweise die Funktion eines Mausklicks erzeugt werden kann, oder auch andere Funktionen an der grafischen Bedienoberfläche aktiviert werden können.

Gemäß einer weiteren vorteilhaften Ausführungsform ist die vorgegebene Funktion die Aktivierung eines Objekts auf der grafischen Bedienoberfläche, zumindest wenn die Koordinate mit einem vorgegebem Koordinatenbereich des Objekts übereinstimmt. Gemäß dieser Ausführungsform wird an der aktuellen Position insbesondere eines Endeffektors des Robotermanipulators die Funktion ähnlich zu einem Mausklick aktiviert, wobei die aktuelle Eingabegröße und/oder der vergangene Verlauf der Eingabegrößen die aktuelle Koordinate der grafischen Bedienoberfläche bestimmt, sodass ähnlich zu dem Führen eines Mauszeiger auf ein Objekt der grafischen Bedienoberfläche und beim anschließenden Klicken oder doppel-Klicken mit der Maus das jeweilige sich unter dem Mauszeiger befindliche Objekt aktiviert werden kann.

Gemäß einer weiteren vorteilhaften Ausführungsform ist die vorgegebene geometrische Struktur eine Ebene und die Ebene ist in ihrer Lage und Position invariant gegenüber einem erdfesten Koordinatensystem.

Gemäß einer weiteren vorteilhaften Ausführungsform ist die Recheneinheit zum derartigen Ansteueren der Aktuatoren ausgeführt, dass beim manuellen Führen des Robotermanipulators der Robotermanipulator eine von der erfassten aktuellen Eingabegröße und/oder der transformieren Eingabegröße haptische und/oder taktile Rückmeldung ausgibt.

Gemäß einer weiteren vorteilhaften Ausführungsform umfasst die haptische und/oder taktile Rückmeldung jeweils zumindest eine aus den folgenden:
- positionsabhängiges Raster, insbesondere abhängig von der Position eines Endeffektors,
- widerstandsbedingte Begrenzung des Arbeitsbereichs, in dem der Robotermanipulator manuell führbar ist, das heißt eine durch Gegenkraft erzeugte künstliche Wand,
- Rückmeldung bei Übereinstimmung der Eingabegröße und/oder einer aktuellen Position und/oder aktuellen Orientierung des Robotermanipulators und/oder der transformierten Eingabegröße mit einem Objekt auf der grafischen Bedienoberfläche, wobei die Koordinate der graphischen Bedienoberfläche der Eingabegröße und/oder einer aktuellen Position und/oder aktuellen Orientierung und/oder der transformierten Eingabegröße des Robotermanipulator zugeordnet ist,
- Signal, wenn die Koordinate mit einem vorgegeben Koordinatenbereich des Objekts der graphischen Bedienoberfläche übereinstimmt.

Gemäß einer weiteren vorteilhaften Ausführungsform System ist die Anzeigeeinheit ein Bildschirm.

Gemäß einer weiteren vorteilhaften Ausführungsform ist die Recheneinheit zum schwerkraftkompensierten Ansteuern des Robotermanipulators ausgeführt. Beim schwerkraftkompensierten Ansteuern des Robotermanipulators werden die Aktuatoren so angesteuert, dass eine auf den Robotermanipulator wirkende Schwerkraft ausgeglichen wird, sodass sich der Robotermanipulator unter Abwesenheit einer externen Krafteinwirkung und ausgehend von einer statischen Ruheposition beschleunigungsfrei in dieser Ruheposition weiter befindet und in dieser verbleibt. Dies erleichtert vorteilhaft dem Anwender das manuelle Führen des Robotermanipulators.

Ein weiterer Aspekt der Erfindung betrifft ein Verfahren zum Vornehmen einer Eingabe an einem Robotermanipulator mit einer Vielzahl von durch Gelenke miteinander verbundenen Gliedern und mit Aktuatoren, wobei der Robotermanipulator mit einer Recheneinheit verbunden ist, aufweisend die Schritte:
- Erfassen einer durch den Anwender durch manuelles Führen des Robotermanipulators aufgebrachten Eingabegröße am Robotermanipulator durch eine mit der Recheneinheit verbundene Sensoreinheit, wobei die Eingabegröße eine kinematische Größe oder eine Kraft und/oder ein Moment ist,
- Übermitteln der Eingabegröße an die Recheneinheit durch die Sensoreinheit, und
- Transformieren der Eingabegröße mittels einer vorgegeben Eingangsgrößenabbildung durch die Recheneinheit, wobei die Eingangsgrößenabbildung eine mathematische Abbildung der Eingabegröße auf eine Koordinate einer graphischen Bedienoberfläche oder auf einen Einstellwert eines von der Recheneinheit virtuellen Stellgliedes definiert,

Gemäß einer vorteilhaften Ausführungsform weist das Verfahren weiterhin den Schritt auf:
- Anzeigen eines Mauszeigers mit der aktuellen Mauszeigerkoordinate und/oder Anzeigen des aktuellen Einstellwertes des virtuellen Stellgliedes durch die Anzeigeeinheit.

Gemäß einer vorteilhaften Ausführungsform weist das Verfahren weiterhin den Schritt auf:
- Ausführen einer vorgegeben Operation des Robotermanipulators abhängig von der transformierten Eingabegröße bzw. der Koordinate bzw. des Einstellwerts.

Vorteile und bevorzugte Weiterbildungen des vorgeschlagenen Verfahrens ergeben sich durch eine analoge und sinngemäße Übertragung der im Zusammenhang mit dem vorgeschlagenen System vorstehend gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: ein System zum Vornehmen einer Eingabe an einem Robotermanipulator gemäß einem Ausführungsbeispiel der Erfindung, und
- Fig. 2: ein Verfahren zum Vornehmen einer Eingabe an einem Robotermanipulator gemäß einem weiteren Ausführungsbeispiel der Erfindung.

Die Darstellungen in den Figuren sind schematisch und nicht maßstäblich.

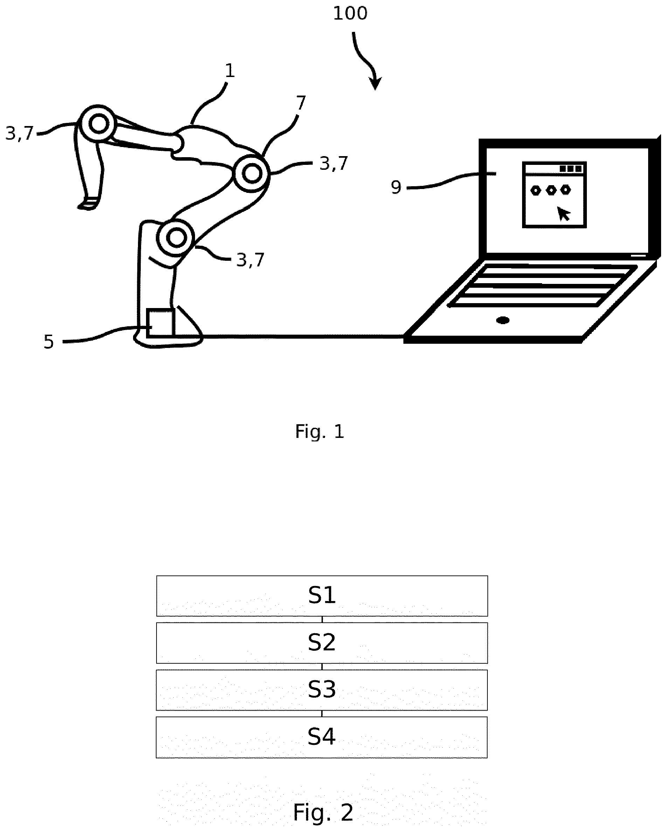

Fig. 1 zeigt ein System 100 zum Vornehmen einer Eingabe an einem Robotermanipulator 1, aufweisend:
- einen Robotermanipulator 1 mit einer Vielzahl von durch Gelenke miteinander verbundenen Gliedern und mit Aktuatoren 3,
- eine am Sockel des Robotermanipulators 1 angeordnete Recheneinheit 5,
- eine mit der Recheneinheit 5 verbundene Sensoreinheit 7.

Die Sensoreinheit 7 dient zum Erfassen einer durch den Anwender durch manuelles Führen des Robotermanipulators 1 aufgebrachten Eingabegröße am Robotermanipulator 1, wobei die Eingabegröße eine am Robotermanipulator 1 durch den Anwender aufgebrachte Kraft ist und wobei die Sensoreinheit 7 zum Übermitteln der Eingabegröße an die Recheneinheit 5 ausgeführt ist. Die Recheneinheit 5 dient hierbei zum Transformieren der Eingabegröße mittels einer vorgegeben Eingangsgrößenabbildung, und die Eingangsgrößenabbildung ist eine mathematische Abbildung der Eingabegröße auf eine Koordinate einer graphischen Bedienoberfläche oder auf einen Einstellwert eines virtuellen Stellgliedes. Das System 100 weist ferner eine Anzeigeeinheit 9 auf, wobei die Anzeigeeinheit 9 zum Anzeigen zumindest eines der folgenden ausgeführt ist:
- Eingabegröße,
- Maß für die Eingabegröße,
- transformierte Eingabegröße,
- Maß für die transformierte Eingabegröße.

Insbesondere ist die Anzeigeeinheit zum Anzeigen eines Mauszeigers mit der aktuellen Mauszeigerkoordinate ausgeführt. Die Sensoreinheit 7 dient daher zum Erfassen einer aktuellen Position und/oder Orientierung des Robotermanipulators 1 und zum Übermitteln der aktuellen Position und/oder Orientierung an die Recheneinheit 5, wobei die Recheneinheit 5 zum derartigen Ansteueren der Aktuatoren 3 ausgeführt ist, dass der Robotermanipulator 1 beim manuellen Führen auf eine vorgegebene raumfest definierte Ebene zu gegen die durch manuelles Führen verursachten Bewegung des Robotermanipulators 1 einen Widerstand erzeugt. Die Rechenheit 5 dient ferner zum Aktivieren einer vorgegebenen Funktion, wenn ein vorgegebener Grenzwert im Widerstand überschritten wird oder ein vorgegebener Grenzwert im Abstand eines vordefinierten Punktes des Robotermanipulators 1 zur geometrischen Struktur unterschritten wird. Die vorgegebene Funktion ist die Aktivierung eines Objekts auf der grafischen Bedienoberfläche, zumindest wenn die Koordinate mit einem vorgegebem Koordinatenbereich des Objekts übereinstimmt. Die Recheneinheit 5 ist außerdem zum derartigen Ansteueren der Aktuatoren 3 ausgeführt, dass beim manuellen Führen des Robotermanipulators 1 der Robotermanipulator 1 eine von der erfassten aktuellen Eingabegröße und/oder der transformieren Eingabegröße eine haptische und/oder taktile Rückmeldung ausgibt, wobei die haptische und/oder taktile Rückmeldung jeweils zumindest eine aus den folgenden umfasst:
- positionsabhängiges Raster,
- Widerstandsbedingte Begrenzung des Arbeitsbereichs, in dem der Robotermanipulator 1 manuell führbar ist,
- Rückmeldung bei Übereinstimmung einer Eingabegröße und/oder einer aktuellen Position und/oder aktuellen Orientierung des Robotermanipulators 1 mit einem Objekt auf der grafischen Bedienoberfläche, wobei die Koordinate der graphischen Bedienoberfläche einer Eingabegröße und/oder eine aktuellen Position und/oder aktuellen Orientierung des Robotermanipulator 1 zugeordnet ist,
- Signal, wenn die Koordinate mit einem vorgegeben Koordinatenbereich des Objekts der graphischen Bedienoberfläche übereinstimmt. Die Anzeigeeinheit 9 ist hierbei ein Bildschirm.

Fig. 2 zeigt ein Verfahren zum Vornehmen einer Eingabe an einem Robotermanipulator 1 mit einer Vielzahl von durch Gelenke miteinander verbundenen Gliedern und mit Aktuatoren 3, wobei der Robotermanipulator 1 mit einer Recheneinheit 5 verbunden ist, aufweisend die Schritte:
- Erfassen S1 einer durch den Anwender durch manuelles Führen des Robotermanipulators 1 aufgebrachten Eingabegröße am Robotermanipulator 1 durch eine mit der Recheneinheit 5 verbundene Sensoreinheit 7, wobei die Eingabegröße eine kinematische Größe oder eine Kraft und/oder ein Moment ist,
- Übermitteln S2 der Eingabegröße an die Recheneinheit 5 durch die Sensoreinheit 7, und
- Transformieren S3 der Eingabegröße mittels einer vorgegeben Eingangsgrößenabbildung durch die Recheneinheit 5, wobei die Eingangsgrößenabbildung eine mathematische Abbildung der Eingabegröße auf eine Koordinate einer graphische Bedienoberfläche oder auf einen Einstellwert eines von der Recheneinheit 5 virtuellen Stellgliedes definiert, und
- Anzeigen S4 eines Mauszeigers mit der aktuellen Mauszeigerkoordinate und/oder zum Anzeigen des aktuellen Einstellwertes des virtuellen Stellgliedes durch die Anzeigeeinheit.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche und deren rechtliche Entsprechungen, wie etwa weitergehende Erläuterungen in der Beschreibung, definiert wird.

### Bezugszeichenliste

- 1: Robotermanipulator
- 3: Aktuatoren
- 5: Recheneinheit
- 7: Sensoreinheit
- 9: Anzeigeeinheit
- 100: System

- S1: Erfassen
- S2: Übermitteln
- S3: Transformieren
- S4: Anzeigen

## Patentansprüche

1. System (100) zum Vornehmen einer Eingabe an einem Robotermanipulator (1), aufweisend:
- einen Robotermanipulator (1) mit einer Vielzahl von durch Gelenke miteinander verbundenen Gliedern und mit Aktuatoren (3),
- eine mit dem Robotermanipulator (1) verbundene Recheneinheit (5),
- eine mit der Recheneinheit (5) verbundene Sensoreinheit (7),
wobei die Sensoreinheit (7) zum Erfassen einer durch den Anwender durch manuelles Führen des Robotermanipulators (1) aufgebrachten Eingabegröße am Robotermanipulator (1) ausgeführt ist, wobei die Eingabegröße eine kinematische Größe oder eine Kraft und/oder ein Moment ist, und wobei die Sensoreinheit (7) zum Übermitteln der Eingabegröße an die Recheneinheit (5) ausgeführt ist, wobei die Recheneinheit (5) zum Transformieren der Eingabegröße mittels einer vorgegeben Eingangsgrößenabbildung ausgeführt ist, **dadurch gekennzeichnet dass**, die Eingangsgrößenabbildung eine mathematische Abbildung der Eingabegröße auf eine Koordinate einer graphischen Bedienoberfläche definiert, wobei das System (100) eine Anzeigeeinheit (9) aufweist, wobei die Anzeigeeinheit (9) zum Anzeigen der grafischen Bedienoberfläche und von Objekten auf der Bedienoberfläche und eines Mauszeigers mit der aktuellen Koordinate als Mauszeigerkoordinate ausgeführt ist.

2. System (100) nach einem der vorhergehenden Ansprüche,
wobei die Sensoreinheit (7) zum Erfassen einer aktuellen Position und/oder Orientierung des Robotermanipulators (1) und zum Übermitteln der aktuellen Position und/oder Orientierung an die Recheneinheit (5) ausgeführt ist, und wobei die Recheneinheit (5) zum derartigen Ansteueren der Aktuatoren (3) ausgeführt ist, dass der Robotermanipulator (1) beim manuellen Führen auf eine vorgegebene geometrische Struktur zu gegen die durch manuelles Führen verursachten Bewegung des Robotermanipulators (1) einen Widerstand erzeugt, und wobei die Rechenheit (5) zum Aktivieren einer vorgegebenen Funktion ausgeführt ist, wenn ein vorgegebener Grenzwert im Widerstand überschritten wird oder ein vorgegebener Grenzwert im Abstand eines vordefinierten Punktes des Robotermanipulators (1) zur geometrischen Struktur unterschritten wird.

3. System (100) nach Anspruch 2,
wobei die vorgegebene Funktion die Aktivierung eines Objekts auf der grafischen Bedienoberfläche ist, zumindest wenn die Koordinate mit einem vorgegebem Koordinatenbereich des Objekts übereinstimmt.

4. System (100) nach einem der Ansprüche 2 bis 3,
wobei die vorgegebene geometrische Struktur eine Ebene ist und die Ebene in ihrer Lage und Position invariant gegenüber einem erdfesten Koordinatensystem ist.

5. System (100) nach einem der vorhergehenden Ansprüche,
wobei die Recheneinheit (5) zum derartigen Ansteueren der Aktuatoren (3) ausgeführt ist, dass beim manuellen Führen des Robotermanipulators (1) der Robotermanipulator (1) eine von der erfassten aktuellen Eingabegröße und/oder der transformieren Eingabegröße eine haptische und/oder taktile Rückmeldung ausgibt.

6. System (100) nach Anspruch 5,
wobei die haptische und/oder taktile Rückmeldung jeweils zumindest eine aus den folgenden umfasst:
- positionsabhängiges Raster,
- widerstandsbedingte Begrenzung des Arbeitsbereichs, in dem der Robotermanipulator (1) manuell führbar ist,
- Rückmeldung bei Übereinstimmung einer Eingabegröße und/oder einer aktuellen Position und/oder aktuellen Orientierung des Robotermanipulators (1) mit einem Objekt auf der grafischen Bedienoberfläche, wobei die Koordinate der graphischen Bedienoberfläche einer Eingabegröße und/oder eine aktuellen Position und/oder aktuellen Orientierung des Robotermanipulator (1) zugeordnet ist,
- Signal, wenn die Koordinate mit einem vorgegeben Koordinatenbereich des Objekts der graphischen Bedienoberfläche übereinstimmt.

7. System (100) nach einem der Ansprüche 1 bis 6,
wobei die Anzeigeeinheit (9) ein Bildschirm ist.

8. System (100) nach einem der vorhergehenden Ansprüche,
wobei die Recheneinheit (5) zum schwerkraftkompensierten Ansteuern des Robotermanipulators (1) ausgeführt ist.

9. Verfahren zum Vornehmen einer Eingabe an einem Robotermanipulator (1) mit einer Vielzahl von durch Gelenke miteinander verbundenen Gliedern und mit Aktuatoren (3), wobei der Robotermanipulator (1) mit einer Recheneinheit (5) verbunden ist, aufweisend die Schritte:
- Erfassen (S1) einer durch den Anwender durch manuelles Führen des Robotermanipulators (1) aufgebrachten Eingabegröße am Robotermanipulator (1) durch eine mit der Recheneinheit (5) verbundene Sensoreinheit (7), wobei die Eingabegröße eine kinematische Größe oder eine Kraft und/oder ein Moment ist,
- Übermitteln (S2) der Eingabegröße an die Recheneinheit (5) durch die Sensoreinheit (7), und
- Transformieren (S3) der Eingabegröße mittels einer vorgegeben Eingangsgrößenabbildung durch die Recheneinheit (5), wobei die Eingangsgrößenabbildung eine mathematische Abbildung der Eingabegröße auf eine Koordinate einer graphischen Bedienoberfläche definiert, wobei auf einer Anzeigeeinheit (9) die grafische Bedienoberfläche und Objekte auf der Bedienoberfläche und ein Mauszeiger mit der aktuellen Koordinate als Mauszeigerkoordinate angezeigt werden.

## Claims

1. A system (100) for performing an input on a robotic manipulator (1), having:
- a robotic manipulator (1) having a plurality of limbs connected to one another by articulations and having actuators (3),
- a computing unit (5) connected to the robotic manipulator (1),
- a sensor unit (7) connected to the computing unit (5), wherein the sensor unit (7) is designed to record an input variable, applied by the user by manually guiding the robotic manipulator (1), on the robotic manipulator (1), wherein the input variable is a kinematic variable or a force and/or a moment, and wherein the sensor unit (7) is designed to transmit the input variable to the computing unit (5), wherein the computing unit (5) is designed to transform the input variable by way of predefined input variable mapping, **characterized in that** the input variable mapping defines a mathematical mapping of the input variable onto a coordinate of a graphical user interface, wherein the system (100) comprises a display unit (9), wherein the display unit (9) is designed for displaying the graphical user interface and objects on the graphical user interface and a mouse pointer with the current coordinate as a mouse pointer coordinate.

2. The system (100) according to any one of the preceding claims,
wherein the sensor unit (7) is designed for recording a current position and/or orientation of the robotic manipulator (1) and for transmitting the current position and/or orientation to the computing unit (5), and wherein the computing unit (5) is designed for actuating the actuators (3) in such a manner that the robotic manipulator (1), during manual guiding onto a specific geometric structure, generates a resistance against the movement of the robotic manipulator (1) caused by manual guiding, and wherein the computing unit (5) is designed for activating a predefined function if a predetermined limit value in the resistance is exceeded or if a predetermined limit value in the distance of a predefined point of the robotic manipulator (1) with respect to the geometric structure is undershot.

3. The system (100) according to claim 2,
wherein the predefined function is the activation of an object on the graphical user interface, at least when the coordinate coincides with a predetermined coordinate range of the object.

4. The system (100) according to any one of claims 2 to 3,
wherein the predefined geometric structure is a plane and the plane is invariant in terms of its orientation and position with respect to a terrestrial coordinate system.

5. The system (100) according to any one of the preceding claims,
wherein the computing unit (5) is designed for actuating the actuators (3) in such a manner that, during the manual guiding of the robotic manipulator (1), the robotic manipulator (1) outputs haptic and/or tactile feedback of the recorded current input variable and/or of the transformed input variable.

6. The system (100) according to claim 5,
wherein the haptic and/or tactile feedback in each case includes at least one of the following:
- a position-dependent grid,
- a resistance-caused limitation of the work region in which the robotic manipulator (1) can be manually guided,
- feedback in case of coinciding of an input variable and/or of a current position and/or current orientation of the robotic manipulator (1) with an object on the graphical user interface, wherein the coordinate of the graphical user interface is assigned to an input variable and/or a current position and/or a current orientation of the robotic manipulator (1),
- a signal if the coordinate coincides with a predefined coordinate range of the object of the graphical user interface.

7. The system (100) according to any one of claims 1 to 6, wherein the display unit (9) is a screen.

8. The system (100) according to any one of the preceding claims,
wherein the computing unit (5) is designed for actuating the robotic manipulator (1) with gravity compensation.

9. A method for performing an input on a robotic manipulator (1) having a plurality of limbs connected to one another by articulations and having actuators (3), wherein the robotic manipulator (1) is connected to a computing unit (5), having the steps of:
- recording (S1) an input variable applied by the user by manually guiding the robotic manipulator (1), on the robotic manipulator (1), by a sensor unit (7) connected to the computing unit (5), wherein the input variable is a kinematic variable or a force and/or a moment,
- transmitting (S2) the input variable to the computing unit (5) by the sensor unit (7), and
- transforming (S3) the input variable by means of a predefined input variable mapping by the computing unit (5), wherein the input variable mapping defines a mathematical mapping of the input variable onto a coordinate of a graphical user interface, wherein the graphical user interface and objects on the graphical user interface and a mouse pointer with the current coordinate as a mouse pointer coordinate are displayed on a display unit (9).

## Revendications

1. Système (100) permettant d'effectuer une entrée sur un robot manipulateur (1), présentant :
- un robot manipulateur (1) comportant une pluralité de membres reliés entre eux par des articulations et comportant des actionneurs (3),
- une unité de calcul (5) connectée au robot manipulateur (1),
- une unité formant capteur (7) connectée à l'unité de calcul (5), dans lequel l'unité formant capteur (7) est configurée pour détecter une grandeur d'entrée appliquée au robot manipulateur (1) par l'utilisateur par guidage manuel du robot manipulateur (1), dans lequel la grandeur d'entrée est une grandeur cinématique ou une force et/ou un couple, et dans lequel l'unité formant capteur (7) est configurée pour transmettre la grandeur d'entrée à l'unité de calcul (5), dans lequel l'unité de calcul (5) est configurée pour transformer la grandeur d'entrée au moyen d'une représentation de grandeur d'entrée prédéterminée, **caractérisé en ce que** la représentation de grandeur d'entrée définit une représentation mathématique de la grandeur d'entrée sur une coordonnée d'une interface opérateur graphique, dans lequel le système (100) présente une unité d'affichage (9), dans lequel l'unité d'affichage (9) est configurée pour afficher l'interface opérateur graphique et des objets sur l'interface opérateur et un pointeur de souris comportant la coordonnée actuelle comme coordonnée de pointeur de souris.

2. Système (100) selon l'une des revendications précédentes,
dans lequel l'unité formant capteur (7) est configurée pour détecter une position et/ou une orientation actuelles du robot manipulateur (1) et pour transmettre la position et/ou l'orientation actuelles à l'unité de calcul (5), et dans lequel l'unité de calcul (5) est configurée pour commander les actionneurs (3) de telle sorte que le robot manipulateur (1), lors du guidage manuel vers une structure géométrique prédéterminée, génère une résistance contre le mouvement du robot manipulateur (1) provoqué par le guidage manuel, et dans lequel l'unité de calcul (5) est configurée pour activer une fonction prédéterminée lorsqu'une valeur limite prédéterminée est dépassée dans la résistance ou qu'une valeur limite prédéterminée n'est pas atteinte dans l'écart entre un point prédéfini du robot manipulateur (1) et la structure géométrique.

3. Système (100) selon la revendication 2,
dans lequel la fonction prédéterminée est l'activation d'un objet sur l'interface opérateur graphique, au moins lorsque la coordonnée correspond à une plage de coordonnées prédéterminée de l'objet.

4. Système (100) selon l'une des revendications 2 à 3,
dans lequel la structure géométrique prédéterminée est un plan et le plan est invariant dans son emplacement et sa position par rapport à un système de coordonnées fixe par rapport à la terre.

5. Système (100) selon l'une des revendications précédentes,
dans lequel l'unité de calcul (5) est configurée pour commander les actionneurs (3) de telle sorte que, lors du guidage manuel du robot manipulateur (1), le robot manipulateur (1) émet un message de retour haptique et/ou tactile à partir de la grandeur d'entrée actuelle détectée et/ou de la grandeur d'entrée transformée.

6. Système (100) selon la revendication 5,
dans lequel le message de retour haptique et/ou tactile comprend respectivement au moins un élément parmi les éléments suivants :
- trame dépendant de la position,
- limitation liée à la résistance de la zone de travail dans laquelle le robot manipulateur (1) peut être guidé manuellement,
- message de retour en cas de correspondance entre une grandeur d'entrée et/ou une position actuelle et/ou une orientation actuelle du robot manipulateur (1) et un objet sur l'interface opérateur graphique, dans lequel la coordonnée de l'interface opérateur graphique est associée à une grandeur d'entrée et/ou à une position actuelle et/ou à une orientation actuelle du robot manipulateur (1),
- signal lorsque la coordonnée correspond à une plage de coordonnées prédéterminée de l'objet de l'interface opérateur graphique.

7. Système (100) selon l'une des revendications 1 à 6,
dans lequel l'unité d'affichage (9) est un écran.

8. Système (100) selon l'une des revendications précédentes,
dans lequel l'unité de calcul (5) est configurée pour commander le robot manipulateur (1) de manière à compenser la force de gravité.

9. Procédé permettant d'effectuer une entrée sur un robot manipulateur (1) comportant une pluralité de membres reliés entre eux par des articulations et comportant des actionneurs (3), dans lequel le robot manipulateur (1) est connecté à une unité de calcul (5), présentant les étapes consistant à :
- détecter (S1) une grandeur d'entrée, appliquée au robot manipulateur (1) par l'utilisateur par guidage manuel du robot manipulateur (1), à l'aide d'une unité formant capteur (7) connectée à l'unité de calcul (5), dans lequel la grandeur d'entrée est une grandeur cinématique ou une force et/ou un couple,
- transmettre (S2) la grandeur d'entrée à l'unité de calcul (5) à l'aide de l'unité formant capteur (7), et
- transformer (S3) la grandeur d'entrée au moyen d'une représentation de grandeur d'entrée prédéterminée à l'aide de l'unité de calcul (5), dans lequel la représentation de grandeur d'entrée définit une représentation mathématique de la grandeur d'entrée sur une coordonnée d'une interface opérateur graphique, dans lequel l'interface opérateur graphique et des objets sur l'interface opérateur et un pointeur de souris comportant la coordonnée actuelle comme coordonnée de pointeur de souris sont affichés sur une unité d'affichage (9).
